# FASCICULE DE BREVET EUROPEEN

(11) **EP 2 205 891 B1**
(45) Date de publication et mention de la délivrance du brevet: **10.06.2015**
(21) Numéro de dépôt: 08836435.1
(22) Date de dépôt: 04.07.2008
(51) Int. Cl.: F16H 25/20

(54) **ACTIONNEUR LINÉAIRE TÉLESCOPIQUE POUR DÉPLACER UN PREMIER ET UN SECOND ÉLÉMENTS RELATIVEMENT À UN ÉLÉMENT FIXE**
LINEARER TELESKOPAKTUATOR ZUR BEWEGUNG EINES ERSTEN UND EINES ZWEITEN ELEMENTS IM VERHÄLTNIS ZU EINEM STATIONÄREN ELEMENT
LINEAR TELESCOPIC ACTUATOR FOR MOVING A FIRST AND A SECOND ELEMENT RELATIVE TO A STATIONARY ELEMENT

(30) Priorité: 04.10.2007 FR 0706963
(43) Date de publication de la demande: 14.07.2010
(73) Titulaire: Aircelle, 76700 Gonfreville l'Orcher (FR)
(72) Inventeur: VAUCHEL, Guy, F-76600 Le Havre (FR); MORADELL-CASELLAS, Pierre, F-61100 Saint Georges des Groseillers (FR); BAUDU, Pierre, F-76280 Criquetot l'Esneval (FR)
(74) Mandataire: Gaillarde, Frédéric F. Ch.
(86) Numéro de dépôt international: PCT/FR2008/000960
(87) Numéro de publication internationale: WO 2009/043981

(56) Documents cités:
- WO-A-2007/099333
- FR-A- 2 895 482
- US-A- 3 614 037
- US-A- 4 179 944
- US-A1- 2006 266 146

## Description

La présente invention se rapporte à un actionneur linéaire télescopique pour déplacer un premier et un second éléments relativement à un élément fixe, ces trois éléments appartenant en particulier à un inverseur de poussée pour nacelle de turboréacteur tel que décrit par exemple dans la demande de brevet français non encore publiée et enregistrée sous le n° 06.05512 au nom de la demanderesse et inclus ici par référence.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinés à abriter un turboréacteur double flux apte à générer par l'intermédiaire des pâles de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, également connu sous le nom d'inverseur à cascade, la réorientation du flux d'air est effectuée par des grilles de déviation, le capot n'ayant qu'une simple fonction de coulissage visant à découvrir ou recouvrir ces grilles, la translation du capot mobile s'effectuant selon un axe longitudinal sensiblement parallèle à l'axe de la nacelle. Des portes de blocage complémentaires, activées par le coulissement du capotage, permettent généralement une fermeture de la veine en aval des grilles de manière à optimiser la réorientation du flux froid.

Outre sa fonction d'inversion de poussée, le capot coulissant appartient à la section arrière et présente un côté aval formant une tuyère d'éjection visant à canaliser l'éjection des flux d'air. Cette tuyère peut venir en complément d'une tuyère primaire canalisant le flux chaud et est alors appelée tuyère secondaire.

Le document FR 06.05512 répond aux problèmes d'adaptation de la section de la tuyère aux diverses phases de vol rencontrées, en particulier les phases de décollage et d'atterrissage de l'avion.

Ce document FR 06.05512 décrit (voir les figures 1 et 2 du dessin en annexe) un inverseur de poussée comprenant, d'une part, des grilles de déviation 11 d'au moins une partie d'un flux d'air du turboréacteur, et d'autre part, au moins un capot 10 mobile en translation selon une direction sensiblement longitudinale de la nacelle apte à passer alternativement d'une position de fermeture dans laquelle il assure la continuité aérodynamique de la nacelle et couvre les grilles de déviation 1 1, à une position d'ouverture dans laquelle il ouvre un passage dans la nacelle et découvre les grilles de déviation 11.

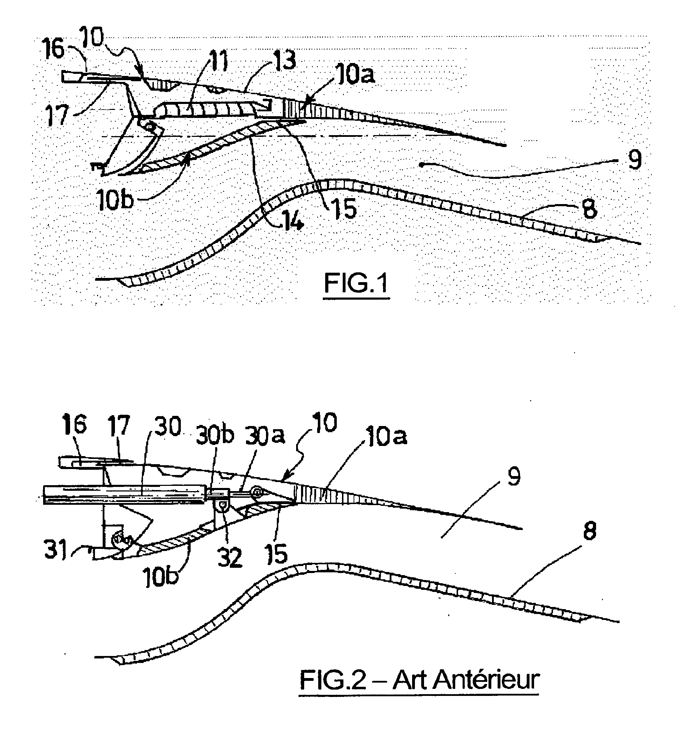

Le capot mobile 10 comprend une partie interne formant un deuxième élément mobile 10a et une partie externe formant un premier élément mobile 10b montées chacune mobile en translation et reliées à un vérin d'actionnement télescopique 30 apte à permettre leur translation longitudinale (voir figure 2). La partie externe 10a (côté aval du capot 10) forme une tuyère d'éjection visant à canaliser l'éjection des flux d'air.

En divisant le capot mobile 10 en une partie interne formant un premier élément mobile 10b et une partie externe formant un deuxième élément mobile 10a déplaçables au moins partiellement indépendamment l'une par rapport à l'autre, il est possible d'adapter aux conditions de vol les positions relatives de la partie externe 10a et de la partie interne 10b de manière à faire varier la section de la tuyère d'éjection formée par le capot mobile 10 en faisant varier la longueur de la ligne aérodynamique interne du capot mobile 10, à la fois lorsque le capot mobile 10 est en position de fermeture et recouvre les grilles de déviation 11, et lorsque le capot mobile 10 est en position d'ouverture.

Le vérin télescopique 30 possède une première tige 30b pour déplacer la partie interne formant le premier élément mobile 10b et une deuxième tige 30a montée coulissante dans la première tige 30b pour déplacer la partie externe formant le deuxième élément mobile 10a de capot. Le rattachement de la partie interne 10b à la première tige 30b est réalisé par l'intermédiaire d'oeillets oblongs 32 disposés de part et d'autre de la tige 30b, de manière à réduire le porte à faux du point de rattachement et éviter toute contrainte d'hyperstaticité dans l'alignement des trois points d'attache du vérin 30 au cadre avant fixe et aux parties externe 10a et interne 10b du capot mobile.

Cette solution est satisfaisante pour un vérin pneumatique ou hydraulique qui dispose de suffisamment de puissance disponible pour compenser la survenue d'efforts de frottement parasites entre les deux tiges de vérin 30a et 30b, dus à un mauvais alignement.

En revanche, pour un vérin électrique, des efforts de frottement parasites restent dommageables car la nécessité d'augmenter la puissance disponible pour surmonter ces frottements se traduit alors par un surdimensionnement du moteur électrique de commande du vérin, ce qui affecte la masse, l'encombrement et donc le coût de l'ensemble.

Par ailleurs, un vérin électrique double effet présente généralement des difficultés d'actionnement. En effet, la deuxième tige étant mobile par rapport à la base du vérin, il est difficile de regrouper les moyens d'actionnement dans ladite base du vérin et la deuxième tige doit généralement être équipée de son propre moteur, qui sera donc également mobile.

La présente invention vise à éviter ces inconvénients en proposant un actionneur linéaire télescopique qui soit simple, compact et léger et puisse à la fois permettre un regroupement des moyens d'actionnement et tolérer des différences d'alignement entre ses points de rattachement avec un élément fixe et un premier et un second éléments à déplacer indépendamment par rapport à cet élément fixe.

A cet effet, l'invention a pour objet un actionneur linéaire télescopique pour déplacer un premier et un second éléments relativement à un élément fixe, comprenant une base, destinée à être rattachée à l'élément fixe, et servant de logement à une première tige bloquée en rotation et apte à être entraînée en translation par l'intermédiaire d'un arbre d'entraînement destiné à être relié à des moyens d'entraînement en rotation, la première tige étant destinée à être rattachée par une extrémité au premier élément à déplacer,
caractérisé en ce que la première tige supporte deuxième tige disposée dans le prolongement de celle-ci et destinée à être rattachée par une extrémité au deuxième élément à déplacer, ladite deuxième tige étant apte à être bloquée en rotation et entraînée en translation par l'intermédiaire d'un deuxième arbre traversant la base et relié à des moyens d'entraînement en rotation

Ainsi, en prévoyant que l'arbre d'entraînement de la deuxième tige traverse le premier étage de l'actionneur, il est possible de regrouper les moyens d'actionnement des deux tiges de l'actionneur dans la base de ce dernier. Ceci permet également d'envisager l'actionnement des deux tiges par un seul moteur, par exemple.

Avantageusement, l'arbre de la deuxième tige étant par ailleurs divisé en une première partie et une deuxième partie assemblées au moyen d'un joint cinétique. Avantageusement encore, le joint cinétique est une liaison rotule.

Ainsi, en divisant le deuxième arbre d'entraînement en deux parties liées par une liaison rotule, la deuxième tige présente une plus grande tolérance d'alignement avec la première tige. Par ailleurs, la liaison rotule permet la transmission totale du mouvement de rotation de la première partie de l'arbre d'entraînement à sa deuxième partie, même non parfaitement alignée.

Avantageusement, la deuxième tige est supportée par un moyen de guidage radial et axial offrant des propriétés d'articulation rotule.

Avantageusement encore, une extrémité de la première tige forme un fourreau pour le guidage en translation de la deuxième tige.

De manière préférentielle, le deuxième arbre d'entraînement est apte à être entraîné en rotation par l'intermédiaire d'une transmission par fourreau rotatif apte à permettre une translation du deuxième arbre permettant de suivre un déploiement ou une rétractation de la première tige tout en maintenant l'entraînement de l'arbre en rotation.

Préférentiellement, les moyens d'entraînement des arbres de transmission sont électriques.

Préférentiellement encore, la mise en translation des tiges s'effectue au moyen d'un système vis / écrou.

La présente invention se rapporte également à un inverseur de poussée pour nacelle de turboréacteur comprenant, d'une part, des moyens de déviation d'au moins une partie d'un flux d'air du turboréacteur, et d'autre part, au moins un capot mobile en translation selon une direction sensiblement parallèle à un axe longitudinal de la nacelle apte à passer alternativement d'une position de fermeture dans laquelle il assure la continuité aérodynamique de la nacelle et couvre les moyens de déviation, à une position d'ouverture dans laquelle il ouvre un passage dans la nacelle et découvre les moyens de déviation, le capot mobile comprenant au moins une partie externe et au moins une partie interne montées chacune mobile en translation, caractérisé en ce qu'il comprend également un actionneur selon l'invention de manière à permettre leur déplacement, indépendamment l'une par rapport à l'autre ou ensemble, selon une direction sensiblement longitudinale de la nacelle.

La mise en oeuvre de l'invention sera mieux comprise à l'aide de la description détaillée qui est exposée ci-dessous en regard du dessin annexé.
La figure 1 (déjà commentée) est une vue partielle schématique en coupe longitudinale d'un inverseur de poussée selon l'art antérieur, équipé d'un capot mobile séparé en une partie interne et une partie externe déplaçables l'une par rapport à l'autre.
La figure 2 (déjà commentée) représente un vérin télescopique d'actionnement des parties interne et externe de capot de type pneumatique ou hydraulique selon l'art antérieur pour l'actionnement de l'inverseur de poussée formant tuyère variable de la figure 1.
La figure 3 représente schématiquement un exemple d'actionneur linéaire télescopique selon l'invention, applicable à un inverseur de poussée du type illustré sur les figures 1 et 2 pour le déplacement des parties interne et externe de son capot mobile.
Les figures 4a à 4e sont des vues analogues à la figure 3 qui illustrent différentes configurations de fonctionnement de cet actionneur linéaire télescopique.
La figure 5 est une représentation d'une variante de réalisation de l'actionneur représenté sur les figures 3, 4a à 4e présentant une rupture du deuxième arbre d'entraînement et une liaison par joint homocinétique.

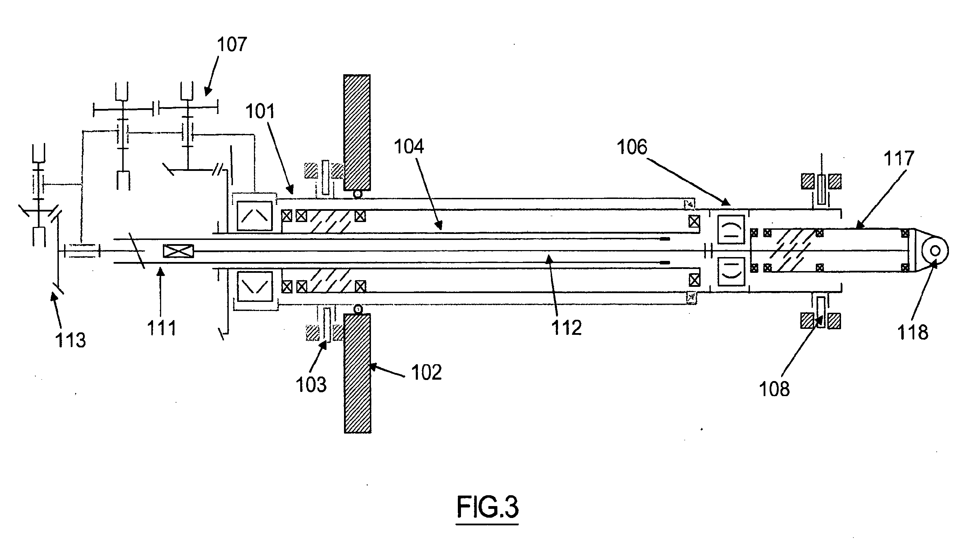

L'actionneur linéaire télescopique illustré sur la figure 3 vise à permettre de déplacer un premier élément mobile 10b - ici, la partie interne 10b de capot des figures 1 et 2 - et un deuxième élément mobile 10a- ici, la partie externe 10a de capot - relativement à un élément fixe 102, ici un cadre avant fixe de l'inverseur de poussée.

L'actionneur comprend une base 101 de forme générale tubulaire, prévue pour être rattachée au cadre avant fixe constituant l'élément fixe 102 par un cardan 103.

Un tube , formant une première tige 106 de l'actionneur télescopique, prévu pour être rattaché à une extrémité 108, constitué par un cardan, au premier élément mobile 10b, est monté mobile en translation axiale mais bloqué en rotation par le cardan.

Une vis d'entraînement de type vis à billes est monté mobile en rotation dans le tube dont une région taraudée vient en prise avec une région filetée de cette vis et forme un premier arbre d'entraînement 104.

Des premiers moyens d'entraînement 107 motorisé électriquement sont prévus pour entraîner en rotation le premier arbre d'entraînement 104 de manière à déployer la première tige 106 tubulaire hors de la base 101 ou la rétracter dans cette dernière.

Une glissière tubulaire est montée mobile en rotation dans le premier arbre d'entrainement d'entraînement 104 et forme un moyen d'entrainement en rotation 111.

Un deuxième arbre d'entrainement 112, liée en translation axiale avec la première tige 106 tubulaire, est monté mobile en translation axiale dans la glissière tubulaire formant moyen d'entrainement en rotation 111.

Des seconds moyens d'entraînement 113 motorisé électriquement sont prévus pour entraîner en rotation le moyen d'entrainement en rotation 111.

Une deuxième tige 117 de l'actionneur télescopique, mobile en translation mais bloquée en rotation, est rattachée par une extrémité 118 à la partie externe 10a de capot.

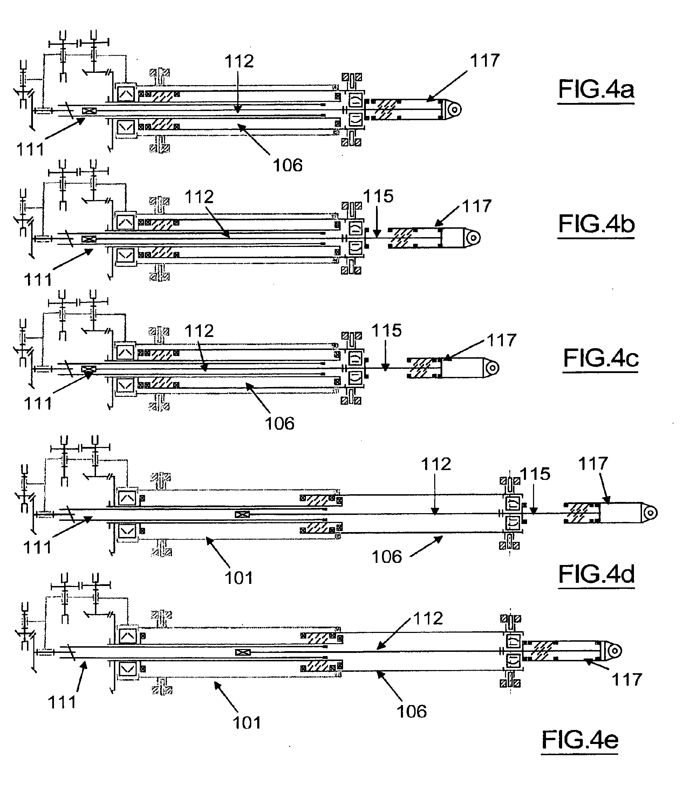

Les figures 4a à 4c montrent trois configurations de fonctionnement de l'actionneur en situation de poussée directe, lorsque la première tige 106 est rétractée.

La figure 4a illustre une configuration de l'avion, dans laquelle le la deuxième tige 117 est totalement rétractée. La section de tuyère est alors minimale.

Sur la figure 4b, un déploiement partiel de la deuxième tige 117 permet d'atteindre une section de tuyère supérieure à la section minimale et correspondant à une nouvelle phase de vol.

Dans une autre phase de vol, un déploiement complet de la deuxième tige 117, permet d'accroître encore la section de tuyère à son maximum (voir figure 4c).

Les figures 4d et 4e illustrent deux configurations de fonctionnement en situation d'inversion de poussée, lorsque la première tige 106 est totalement déployée.

Il est ainsi aisé de synchroniser le déploiement ou le retrait du de la deuxième tige 117 et de la première tige 106 de plusieurs actionneurs télescopiques parallèles tels que décrits ci-dessus, au moyen de flexibles (non représentés) ou d'un pilotage électrique.

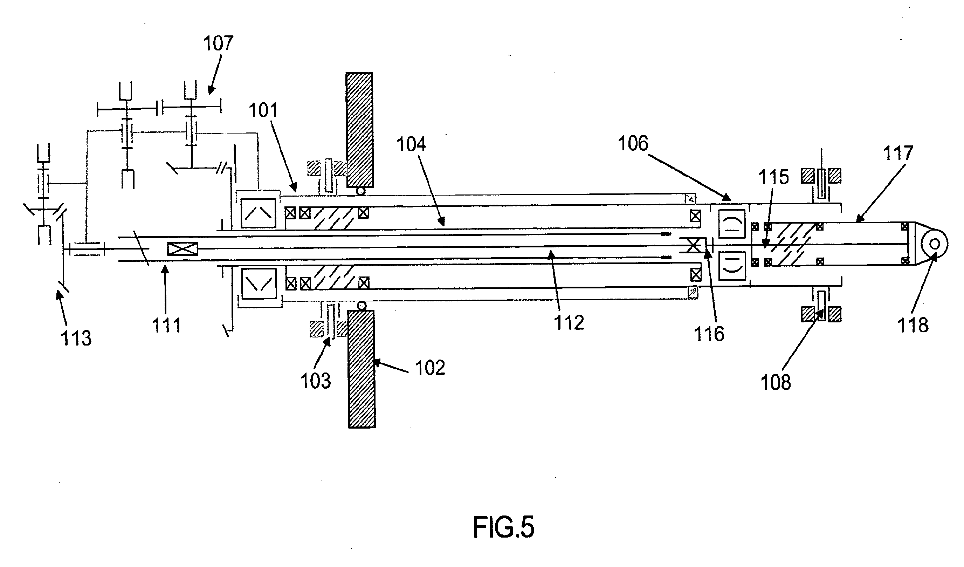

La figure 5 présente un vérin selon l'invention dans lequel le deuxième arbre d'entrainement 112 est prolongé, par l'intermédiaire d'un joint cinétique 116, par une deuxième partie d'arbre d'entraînement 115 également entraînée en rotation et apte à entraîner en translation par, l'intermédiaire d'un écrou, la deuxième tige 117. Un tel perfectionnement permet à l'actionneur un léger débattement angulaire entre la première tige et la deuxième tige et tolère donc des défauts dans l'alignement des éléments mobiles.

Plus précisément, le joint cinétique 116 est un moyen de liaison à rotule disposé entre le deuxième arbre d'entrainement 112 et la deuxième partie d'arbre d'entrainement 115. Cette liaison à rotule permet de transmettre à la seconde partie de l'arbre 115 le mouvement de rotation imprimé au deuxième arbre d'entrainement 112 par la glissière 111 tout en autorisant des variations d'alignement entre les points d'attache constitués par les extrémités 118, 108 et le cardan 103.

Comme mentionné, des actionneurs selon l'invention sont particulièrement destinés à actionner les parties d'un capot d'inverseur de poussée. Bien évidemment, selon la taille du capot à déplacer, il peut être nécessaire d'utiliser un ou plusieurs actionneurs. Dans le cas où plusieurs actionneurs sont utilisés, la synchronisation des deux tiges avec les autres actionneurs pourra être effectuée par synchronisation électrique entre les différents moteurs, par exemple, ou encore en utilisant un moteur pour les premières tiges et un moteur pour les deuxièmes tiges, la puissance de chaque moteur étant transmise aux tiges concernées par un moyen préférentiel de type arbre flexible.

Il convient également de noter qu'il a été décrit un mode de réalisation dans lequel les arbres de l'actionneur sont mis en rotation chacun par un moteur électrique propre. Il est bien évidemment possible en variante de prévoir qu'un seul moteur électrique actionnera les deux arbres soit indépendamment l'un de l'autre soit simultanément.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

| **Désignation** | **Référence numérique** |
|---|---|
| Capot mobile | 10 |
| Premier élément mobile | 10b |
| Deuxième élément mobile | 10a |
| Vérin d'actionnement | 30 |
| Grilles de déviation | 11 |
| Première tige | 30b |
| Deuxième tige | 30a |
| OEillets oblongs | 32 |
| Base | 101 |
| Elément fixe | 102 |
| Cardan | 103 |
| Premier arbre d'entrainement | 104 |
| Première tige | 106 |
| Extrémité (de la première tige) | 108 |
| Premiers moyens d'entrainement | 107 |
| Moyen d'entrainement en rotation | 111 |
| Deuxième arbre d'entrainement | 112 |
| Seconds moyens d'entrainement | 113 |
| Deuxième tige | 117 |
| Extrémité (de la deuxième tige) | 118 |
| Joint cinétique | 116 |
| Deuxième partie d'arbre d'entraînement | 115 |

## Revendications

1. Actionneur linéaire télescopique pour déplacer un premier élément mobile (10b) et un deuxième élément mobile (10a) relativement à un élément fixe (102), comprenant une base (101), destinée à être rattachée à l'élément fixe (102), une première tige (106) bloquée en rotation et apte à être entraînée en translation par l'intermédiaire d'un premier arbre d'entrainement (104) destiné à être relié à des moyens d'entraînement (107) en rotation, la première tige (106) étant destinée à être rattachée par une extrémité (108) au premier élément (10b) à déplacer,
la première tige (106) supportant une deuxième tige (117) disposée dans le prolongement de celle-ci, ladite deuxième tige (117) étant apte à être bloquée en rotation et entraînée en translation par l'intermédiaire d'un deuxième arbre d'entraînement (112) relié à des moyens d'entraînement en rotation (113, 111), l'actionneur étant **caractérisé en ce que** la base (101) sert de logement à la première tige (106) et le deuxième arbre d'entrainement (112) traverse ladite base (101), la deuxième tige (117) étant destinée à être rattachée par une extrémité (118) au deuxième élément (10a) à déplacer.

2. Actionneur selon la revendication 1, **caractérisé en ce que** le deuxième arbre d'entrainement (112), est prolongé, par l'intermédiaire d'un joint cinétique (116), par une deuxième partie d'arbre d'entraînement (115).

3. Actionneur selon la revendication 2, **caractérisé en ce que** le joint cinétique (116) est une liaison rotule.

4. Actionneur selon l'une quelconque des revendications 2 ou 3, **caractérisé en ce que** la deuxième tige (117) est supportée par un moyen de guidage radial et axial offrant des propriétés de rotulage.

5. Actionneur selon l'une quelconque des revendications 1 à 4, **caractérisé en ce que** le deuxième arbre d'entraînement (112) est apte à être entraîné en rotation par l'intermédiaire d'une transmission par fourreau rotatif formant moyen d'entrainement en rotation (111) apte à permettre une translation du deuxième arbre d'entrainement (112) permettant de suivre un déploiement ou une rétractation de la première tige (106) tout en maintenant l'entraînement en rotation du deuxième arbre d'entrainement (112).

6. Actionneur selon l'une quelconque des revendications 1 à 5, **caractérisé en ce que** les moyens d'entraînement (111, 113) des premier et deuxième arbres d'entrainement (104, 112) sont électriques.

7. Actionneur selon l'une quelconque des revendications 1 à 6, **caractérisé en ce que** la mise en translation des première et deuxième tiges (106, 117) s'effectue au moyen d'un système vis / écrou.

8. Inverseur de poussée pour nacelle (1) de turboréacteur comprenant, d'une part, des moyens de déviation (11) d'au moins une partie d'un flux d'air (3b) du turboréacteur, et d'autre part, au moins un capot mobile (10) en translation selon une direction sensiblement parallèle à un axe longitudinal de la nacelle apte à passer alternativement d'une position de fermeture dans laquelle il assure la continuité aérodynamique de la nacelle et couvre les moyens de déviation (11), à une position d'ouverture dans laquelle il ouvre un passage dans la nacelle et découvre les moyens de déviation (11), le capot mobile (10) comprenant au moins une partie interne formant un premier élément mobile (10b) et au moins une partie externe formant un deuxième élément mobile (10a) montées chacune mobile en translation relativement à un cadre avant constituant un élément fixe (102), **caractérisé en ce qu'**il comprend également un actionneur selon l'une quelconque des revendications 1 à 7 de manière à permettre leur déplacement, indépendamment l'une par rapport à l'autre ou ensemble, selon une direction sensiblement longitudinale de la nacelle (1).

## Patentansprüche

1. Linearer Teleskopaktuator zur Bewegung eines ersten mobilen Elements (10b) und eines zweiten mobilen Elements (10a) im Verhältnis zu einem stationären Element (102), umfassend eine Basis (101), die ausgelegt ist, um an das stationäre Element (102) befestigt zu sein, einen ersten Schaft (106), der drehgesichert und geeignet ist, mit Hilfe einer ersten Antriebswelle (104) in Translation versetzt zu werden, die ausgelegt ist, um mit Antriebsmitteln (107) in Drehung verbunden zu sein, wobei der erste Schaft (106) ausgelegt ist, um durch ein Ende (108) an das erste zu bewegende Element (10b) befestigt zu werden,
wobei der erste Schaft (106) einen zweiten Schaft (117) trägt, der in der Verlängerung dieses angeordnet ist, wobei der zweite Schaft (117) geeignet ist, drehgesichert zu sein und mit Hilfe einer zweiten Antriebswelle (112) in Translation versetzt wird, die mit Antriebsmitteln in Drehung (113, 111) verbunden ist, wobei der Aktuator **dadurch gekennzeichnet ist, dass** die Basis (101) als Aufnahme für den ersten Schaft (106) dient und die zweite Antriebswelle (112) die Basis (101) durchquert, wobei der zweite Schaft (117) dazu ausgelegt ist, um durch ein Ende (118) an das zweite zu bewegende Element (10a) verbunden zu sein.

2. Aktuator nach Anspruch 1, **dadurch gekennzeichnet, dass** die zweite Antriebswelle (112) mit Hilfe einer kinetischen Verbindung (116), um einen zweiten Teil (115) der Antriebswellen verlängert ist.

3. Aktuator nach Anspruch 2, **dadurch gekennzeichnet, dass** die kinetische Verbindung (116) eine Gelenkverbindung ist.

4. Aktuator nach einem der Ansprüche 2 oder 3, **dadurch gekennzeichnet, dass** der zweite Schaft (117) von einem radialen und axialen Führungsmittel getragen wird, das Dreheigenschaften aufweist.

5. Aktuator nach einem der Ansprüche 1 bis 4, **dadurch gekennzeichnet, dass** die zweite Antriebswelle (112) geeignet ist, um mit Hilfe einer Übertragung durch eine drehende Hülse in Drehung versetzt zu werden, die ein Mittel zum In-Drehung-Versetzen (111) bildet, das geeignet ist, um eine Translation der zweiten Antriebswelle (112) zu ermöglichen, die ermöglicht, dass ein Auseinanderziehen oder ein Zurückziehen des ersten Vorsprungs (106) folgt, wobei gleichzeitig das In-Drehung-Versetzen der zweiten Antriebswelle (112) beibehalten wird.

6. Aktuator nach einem der Ansprüche 1 bis 5, **dadurch gekennzeichnet, dass** die Antriebsmittel (111, 113) der ersten und der zweiten Antriebswelle (104, 112) elektrisch sind.

7. Aktuator nach einem der Ansprüche 1 bis 6, **dadurch gekennzeichnet, dass** das Versetzen in Translation des ersten und des zweiten Schafts (106, 117) mit Hilfe eines Schrauben-/Schraubenmutter-Systems erfolgt.

8. Schubumkehr für Triebwerksgondel (1), umfassend einerseits Mittel zur Umleitung (11) von mindestens einem Teil eines Luftstroms (3b) des Triebwerks, und andererseits mindestens eine bewegliche Haube (10) in Translation gemäß einer Richtung, die im Wesentlichen parallel zu einer Längsachse der Gondel ist, die geeignet ist, um alternativ von einer Verschlussposition, in der sie die aerodynamische Güte der Gondel sicherstellt und die Mittel zur Umleitung (11) abdeckt, in eine Öffnungsposition überzugehen, in der sie einen Durchgang in der Gondel öffnet und die Mittel zur Umlenkung (11) abdeckt, wobei die bewegliche Haube (10) mindestens einen inneren Teil umfasst, der ein erstes bewegliches Element (10b) bildet, und mindestens einen äußeren Teil, der ein zweites bewegliches Elements (10a) bildet, die jeweils beweglich in Translation mit Bezug auf einen vorderen Rahmen montiert sind, der ein stationäres Element (102) bildet, **dadurch gekennzeichnet, dass** sie auch einen Aktuator nach einem der Ansprüche 1 bis 7 umfasst, um ihre Bewegung, unabhängig mit Bezug zueinander oder gemeinsam gemäß einer im Wesentlichen Längsrichtung der Gondel (1), zu ermöglichen.

## Claims

1. A telescopic linear actuator for displacing a first movable element (10b) and a second movable element (10a) relative to a fixed element (102), comprising a base (101), intended to be fastened to the fixed element (102), a first rod (106) blocked in rotation and capable of being driven in translation via a first driving shaft (104) intended to be connected to means (107) for driving in rotation, the first rod (106) being intended to be fastened by an end (108) to the first element (10b) to be displaced,
the first rod (106) supporting a second rod (117) disposed in the extension thereof, said second rod (117) being capable of being blocked in rotation and driven in translation via a second driving shaft (112) connected to means (113, 111) for driving in rotation, the actuator being **characterized in that** the base (101) serves as a housing to the first rod (106) and the second driving shaft (112) passes through said base (101), the second rod (117) being intended to be fastened by an end (118) to the second element (10a) to be displaced.

2. The actuator according to claim 1, **characterized in that** the second driving shaft (112) is extended, via a kinetic joint (116), by a second driving shaft portion (115).

3. The actuator according to claim 2, **characterized in that** the kinetic coupling (116) consists of a ball-joint connection.

4. The actuator according to any one of claims 2 or 3, **characterized in that** the second rod (117) is supported by a radial and axial guide means providing ball-joint properties.

5. The actuator according to any one of claims 1 to 4, **characterized in that** the second driving shaft (112) is capable of being driven in rotation via a rotating-sheath transmission forming a means (111) for driving in rotation capable of allowing a translation of the second driving shaft (112) allowing to follow a deployment or a retraction of the first rod (106) while keeping driving in rotation the second driving shaft (112).

6. The actuator according to any one of claims 1 to 5, **characterized in that** the driving means (111, 113) of the first and second driving shafts (104, 112) are electrical.

7. The actuator according to any one of claims 1 to 6, **characterized in that** the first and second rods (106, 117) are put in translation by means of a screw/nut system.

8. A thrust reverser for a nacelle (1) of a turbojet engine comprising, on the one hand, means (11) for diverting at least one portion of an air flow (3b) of the turbojet engine, and on the other hand, at least one cowl (10) movable in translation along a direction substantially parallel to a longitudinal axis of the nacelle capable of alternately switching from a closed position, in which it ensures the aerodynamic continuity of the nacelle and covers the deflection means (11), to an open position, in which it opens a passageway within the nacelle and uncovers the deflection means (11), the movable cowl (10) comprising at least one inner portion forming a first movable element (10b) and at least one outer portion forming a second movable element (10a) each mounted movable in translation relative to a front frame constituting a fixed element (102), **characterized in that** it also comprises an actuator according to any one of claims 1 to 7 so as to allow their displacement, independently from each other or together, along a substantially longitudinal direction of the nacelle (1).
